# EUROPÄISCHE PATENTSCHRIFT

(11) **EP 2 676 005 B1**
(45) Veröffentlichungstag und Bekanntmachung des Hinweises auf die Patenterteilung: **05.06.2019**
(21) Anmeldenummer: 12703694.5
(22) Anmeldetag: 02.02.2012
(51) Int. Cl.: F01D 25/26, F02C 6/12

(54) **ABGASTURBOLADER FÜR EINE BRENNKRAFTMASCHINE**
EXHAUST TURBOCHARGER FOR AN INTERNAL COMBUSTION ENGINE
TURBOCOMPRESSEUR À GAZ D'ÉCHAPPEMENT POUR UN MOTEUR À COMBUSTION INTERNE

(30) Priorität: 17.02.2011 DE 102011004345
(43) Veröffentlichungstag der Anmeldung: 25.12.2013
(73) Patentinhaber: Bayerische Motoren Werke Aktiengesellschaft, 80809 München (DE)
(72) Erfinder: EHRMANN, Stefan, 74570 Fichtenau (DE); WIBMER, Michael, 81547 München (DE); VELTHUIS, Jan, 86899 Landsberg (DE)
(86) Internationale Anmeldenummer: PCT/EP2012/000460
(87) Internationale Veröffentlichungsnummer: WO 2012/110202

(56) Entgegenhaltungen:
- EP-A2- 2 048 326
- DE-A1-102004 040 317
- DE-T2- 60 304 128
- DE-T2- 69 914 199
- US-A- 4 181 466
- US-A1- 2009 041 577

## Beschreibung

Die Erfindung betrifft einen Abgasturbolader für eine Brennkraftmaschine mit den Merkmalen aus dem Oberbegriff des Patentanspruchs 1.

Zum technischen Umfeld wird beispielsweise auf die Übersetzung der europäischen Patentschrift DE 603 04 128 T2 und die Übersetzung der europäischen Patentschrift DE 699 14 199 T2 hingewiesen. Aus beiden Patentschriften ist jeweils ein Abgasturbolader für eine Brennkraftmaschine bekannt, der zumindest aus einem Lagergehäuse, einem Verdichtergehäuse und einem Turbinengehäuse besteht. Das Lagergehäuse dient zur drehbaren Lagerung eines Turbinenlaufrades, welches mit einem Verdichterlaufrad im Verdichtergehäuse verbunden ist. Die Leitschaufeln des Turbinenlaufrades ragen axial in einen Abgasabführkanal in dem Turbinengehäuse. Radial außen ist das Turbinenlaufrad in axialer Richtung zumindest abschnittsweise von einem Spiralkanal zur Abgaszuführung umschlungen. Am Übergang vom Spiralkanal in den Abgasabführkanal ist eine Strömungsleitzunge vorgesehen, um das Abgas in einem strömungsoptimalen Winkel auf das Turbinenlaufrad zu leiten. Weiter weist das Turbinengehäuse auf der dem Abgasabführkanal abgewandten Seite eine weitgehend ringförmige Anlagefläche zur Montage des Turbinengehäuses an dem Lagergehäuse auf.

Im Bereich der Strömungsleitzunge treten beim Betrieb des Abgasturboladers hohe Druck- und Zugbelastungen im Turbinengehäuse auf, die durch eine hohe thermische und mechanische Beanspruchung entstehen, wodurch Risse im Turbinengehäuse entstehen können.

Eine Möglichkeit diese Rissbildung im Turbinengehäuse zu vermeiden, ist beispielsweise in der europäischen Patentanmeldung EP 2 048 326 A2 beschrieben. So weisen in dieser Schrift die zwei Strömungsleitzungen für einen Twinscroll-Abgasturbolader jeweils eine unterschiedliche, bzw. ein zueinander verdehte Auslauflänge auf.

Weiter ist aus dem US Patent US4,725,206, von der die vorliegende Erfindung ausgeht, ein Abgasturbolader für eine Brennkraftmaschine bekannt, der aus einem Lagergehäuse zur drehbaren Lagerung eines Turbinenlaufrades, welches axial mit seinen Leitschaufeln in einen Abgasabführkanal in einem Turbinengehäuse ragt, der in axialer Richtung zumindest abschnittsweise radial außen von einem Spiralkanal zur Abgaszuführung umschlungen ist. Am Übergang vom Spiralkanal in den Abgasabführkanal ist eine Strömungsleitzunge für das Abgas vorgesehen ist und das Turbinengehäuse ist auf der dem Abgasabführkanal abgewandten Seite über eine weitgehend ringförmige Anlagefläche an das Lagergehäuse angeordnet. Weiter erstreckt sich in dem Turbinengehäuse in einem Ausführungsbeispiel zwischen der Strömungsleitzunge und der Anlagefläche aus Montage- und Gewichtsgründen eine Nut.

Aufgabe der vorliegenden Erfindung ist es, eine weitere, einfache Maßnahme aufzuzeigen, wie die Rissbildung in diesem Bereich des Turbinengehäuses vermieden werden kann.

Diese Aufgabe wird durch das Merkmal im kennzeichnenden Teil des Patentanspruchs 1 gelöst.

Durch die erfindungsgemäße Ausgestaltung wird eine "weiche" Anbindung des Turbinengehäuses zwischen der Strömungsleitzunge und dem Lagerstuhl erzielt. Hierdurch werden auftretende thermische Spannungen aufgrund der Weichheit zwischen der Strömungsleitzunge und der Anlagefläche des Turbinengehäuses an dem Lagergehäuse abgebaut. Thermische Rissbildung wird somit in einfacher Weise sicher vermieden. Die Tiefe und die Breite der Nut hat sich als besonders vorteilhaft erwiesen.

Vorteilhafte Weiterbildungen der Erfindung sind in den Unteransprüchen ausgeführt.

Ein besonders bevorzugter Umschlingungswinkel der Nut entspricht dem Merkmal des Anspruchs 2.

Desweiteren kann die Nut in vorteilhafterweise gemäß Patentanspruch 3 gefertigt werden. Dies kann beispielsweise spanend durch Fräsen, Drehen etc. erfolgen oder spanlos, beispielsweise durch Gießen.

Selbstverständlich kann die erfindungsgemäße Ausgestaltung gemäß Patentanspruch 4 sowohl für einen Monoscroll-Abgasturbolader als auch für einen Twinscroll-Abgasturbolader eingesetzt werden.

Im Folgenden ist die Erfindung anhand eines bevorzugten Ausführungsbeispieles in einer einzigen Figur näher erläutert.

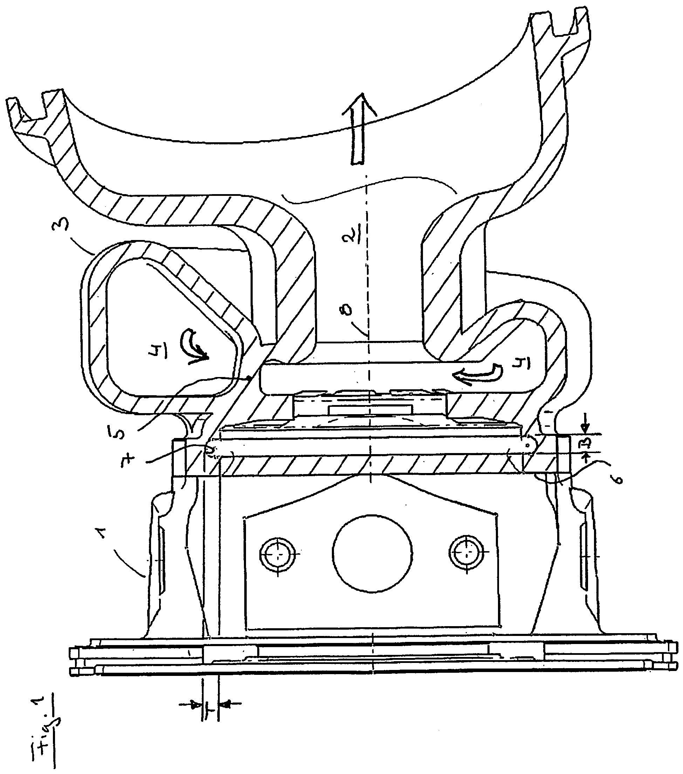

- Fig. 1: zeigt einen Schnitt durch ein Turbinengehäuse und eine Aufsicht auf ein Lagergehäuse eines erfindungsgemäß ausgestalteten Abgasturboladers für eine Brennkraftmaschine.

Fig. 1 zeigt einen Schnitt durch ein Turbinengehäuse 3 und eine Aufsicht auf ein Lagergehäuse 1 eines erfindungsgemäß ausgestalteten Abgasturboladers für eine Brennkraftmaschine. Das Turbinengehäuse 3 ist wie in einem verbauten Zustand des Abgasturboladers an das Lagergehäuse 1 angeordnet. Eine Verdichterseite des Abgasturboladers ist nicht dargestellt.

Das Lagergehäuse 1 dient zur drehbaren Lagerung eines nicht dargestellten Turbinenlaufrades, welches mit seinen Leitschaufeln in axialer Richtung in einen Abgasabführkanal 2 in dem Turbinengehäuse 3 hineinragt. Eine Drehachse 8 des Turbinenlaufrades ist gestrichelt dargestellt. Eine Strömungsrichtung eines Abgases ist mit Pfeilen schematisch eingezeichnet. Radial außen ist der Abgasabführkanal 2 von einem Spiralkanal 4 zur Abgaszuführung auf das Turbinenlaufrad umschlungen. Am Übergang vom Spiralkanal 4 in den Abgasabführkanal 2 ist eine Strömungsleitzunge 5, in Fig. 1 geschnitten dargestellt, vorgesehen, zur strömungsoptimierten Zufuhr des Abgases auf die Schaufeln des Turbinenlaufrades. Weiter weist das Turbinengehäuse 3 auf der dem Abgasabführkanal 2 abgewandten Seite eine weitgehend ringförmige Anlagefläche 6 zur Anlage an dem Lagergehäuse 1 auf.

Erfindungsgemäß weist das Turbinengehäuse 3 in axialer Richtung zwischen der Strömungsleitzunge 5 und der Anlagefläche 6 radial umlaufend, zumindest im Bereich eines Auslaufs der Strömungsleitzunge 5, eine Nut 7 auf. Bevorzugt weist die Nut 7 einen Umschlingungswinkel zwischen 30° und 360° auf, d. h. die Nut 7 umschlingt in diesem Fall das Turbinengehäuse am Innenumfang vollständig. Um Rissen vorzubeugen, hat sich erfindungsgemäß eine Tiefe (T) der Nut 7 zwischen 10 % und 50 % der Materialstärke des Turbinengehäuses 3 in diesem Bereich als besonders wirksam erwiesen. Das Gleiche gilt für eine Breite (B) der Nut 7, die erfindungsgemäß zwischen 10 % und 70 % einer axialen Breite des Turbinengehäuses 3 zwischen der Strömungsleitzunge 5 und der Anlagefläche 6 aufweist. Die Nut 7 wird vorzugsweise spanlos, wie beispielsweise durch Gießen etc. oder spanend, wie beispielsweise durch Drehen oder Fräsen etc. hergestellt. Selbstverständlich kann die erfindungsgemäße Ausgestaltung sowohl für Abgasturbolader mit einem Monoscroll oder einem Twinscroll verwendet werden. Monoscroll heißt hierbei, dass ein einziger Spiralkanal 4 zur Zuführung des Gases auf die Turbinenleitschaufeln vorgesehen ist. Twinscroll bedeutet, dass zwei, meist zueinander parallel angeordnete Spiralkanäle 4 für die Abgaszufuhr vorgesehen sind.

In vorteilhafter Weise kann die erfindungsgemäße Ausgestaltung für Turbinengehäuse 3 verwendet werden, die in einem Gießverfahren hergestellt werden, beispielsweise aus Aluminiumguss, Grauguss oder Stahlguss. Ferner kann die erfindungsgemäße Ausgestaltung auch für Blech-Turbinengehäuse 3, bzw. kombinierte Guss-/Blechturbinengehäuse 3 verwendet werden. Desweiteren kann die erfindungsgemäße Ausgestaltung für Abgasturbolader sowohl für Diesel-Brennkraftmaschinen als auch Benzin-Brennkraftmaschinen zum Einsatz kommen.

Durch die erfindungsgemäße Ausgestaltung erfolgt eine weiche Anbindung zwischen Strömungsleitzunge 5 und Lagergehäuse 1, wodurch auftretende thermische Spannungen aufgrund der Weichheit abgebaut werden und somit eine Rissbildung sicher vermieden ist.

### Bezugszeichenliste:

- 1.: Lagergehäuse
- 2.: Abgasabführkanal
- 3.: Turbinengehäuse
- 4.: Spiralkanal
- 5.: Strömungsleitzunge
- 6.: Anlagefläche
- 7.: Nut
- 8.: Drehachse

## Patentansprüche

1. Abgasturbolader für eine Brennkraftmaschine, bestehend zumindest aus einem Lagergehäuse (1) zur drehbaren Lagerung eines Turbinenlaufrades, welches axial mit seinen Leitschaufeln in einen Abgasabführkanal (2) in einem Turbinengehäuse (3) ragt, der in axialer Richtung zumindest abschnittsweise radial außen von einem Spiralkanal (4) zur Abgaszuführung umschlungen ist, wobei am Übergang vom Spiralkanal (4) in den Abgasabführkanal (2) eine Strömungsleitzunge (5) für das Abgas vorgesehen ist und wobei das Turbinengehäuse (3) auf der dem Abgasabführkanal (2) abgewandten Seite über eine weitgehend ringförmige Anlagefläche (6) an das Lagergehäuse (1) anordenbar ist,
wobei in dem Turbinengehäuse (3) zwischen der Strömungsleitzunge (5) und der Anlagefläche (6) radial umlaufend, zumindest im Bereich eines Auslaufs der Strömungsleitzunge (5) eine Nut (7) eingeformt ist, **dadurch gekennzeichnet, dass** die Nut (7) eine Tiefe (T) zwischen 10% und 50% der Materialstärke des Turbinengehäuses (3) in diesem Bereich aufweist und wobei die Nut (7) eine Breite (B) zwischen 10% und 70% einer Breite des Turbinengehäuses (3) zwischen der Strömungsleitzunge (5) und der Anlagefläche (6) aufweist.

2. Abgasturbolader nach Patentanspruch 1,
**dadurch gekennzeichnet, dass** die Nut (7) einen Umschlingungswinkel zwischen 30° und 360° umschlingt.

3. Abgasturbolader nach einem der Patentansprüche 1 bis 2,
**dadurch gekennzeichnet, dass** die Nut (7) spanlos oder spanend hergestellt ist.

4. Abgasturbolader nach einem der Patentansprüche 1 bis 3,
**dadurch gekennzeichnet, dass** der Abgasturbolader ein Monoscroll-Abgasturbolader oder ein Twinscroll-Abgasturbolader ist.

## Claims

1. An exhaust turbocharger for an internal combustion engine, consisting at least of a bearing housing (1) for rotatably mounting a turbine impeller which projects axially with its guide vanes into an exhaust discharge duct (2) in a turbine housing (3) around which is wound in the axial direction at least in portions radially externally a spiral duct (4) for supplying exhaust, wherein a flow guidance tongue (5) for the exhaust gas is provided at the transition from the spiral duct (4) into the exhaust discharge duct (2) and wherein the turbine housing (3) on the side remote from the exhaust discharge duct (2) can be arranged on the bearing housing (1) by means of a largely annular locating face (6),
wherein a groove (7) is formed, radially circumambiently in the turbine housing (3) between the flow guidance tongue (5) and the locating face (6), at least in the region of an outlet of the flow guidance tongue (5), **characterised in that** the groove (7) has a depth (T) of between 10% and 50% of the material thickness of the turbine housing (3) in this region and wherein the groove (7) has a width (B) of between 10% and 70% of a width of the turbine housing (3) between the flow guidance tongue (5) and the locating face (6).

2. An exhaust turbocharger according to Claim 1,
**characterised in that** the groove (7) winds in an angle of wrap of between 30° and 360°.

3. An exhaust turbocharger according to one of Claims 1 to 2,
**characterised in that** the groove (7) is produced without cutting or by metal cutting.

4. An exhaust turbocharger according to one of Claims 1 to 3,
**characterised in that** the exhaust turbocharger is a mono-scroll exhaust turbocharger or a twin-scroll exhaust turbocharger.

## Revendications

1. Turbocompresseur à gaz d'échappement destiné à un moteur à combustion interne constitué au moins par un logement de palier (1) permettant le montage mobile en rotation d'un rotor de turbine dont les aubes directrices pénètrent axialement dans un canal d'évacuation des gaz d'échappement (2) d'un carter de turbine (3) qui est entouré en direction axiale, au moins par segments radialement vers l'extérieur par un canal en spirale (4) permettant l'admission des gaz d'échappement, enroulé autour de celui-ci,
turbocompresseur dans lequel, au niveau de la transition entre le canal en spirale (4) et le canal d'évacuation des gaz d'échappement (2), il est prévu une languette de guidage (5) de la circulation des gaz d'échappement et, le carter de la turbine (3) peut être installé sur le logement de palier (1) sur son côté situé à l'opposé du canal d'évacuation des gaz d'échappement (2) par une surface d'appui (6) essentiellement annulaire,
une rainure périphérique (7) formée dans le carter de turbine (3) s'étendant radialement entre la languette de guidage (5) de la circulation et la surface d'appui (6), au moins dans la zone de sortie de la languette de guidage (5),
**caractérisé en ce que**
la rainure (7) a une profondeur (T) située entre 10% et 50% de l'épaisseur du matériau du carter de turbine (3), dans cette zone, et la rainure (7) a une largeur (B) située entre 10% et 70% de la largeur du carter de turbine (3) entre la languette de guidage (5) de la circulation et la surface d'appui (6).

2. Turbocompresseur à gaz d'échappement conforme à la revendication 1,
**caractérisé en ce que**
la rainure (7) s'étend sur un angle d'enroulement compris entre 30° et 360°.

3. Turbocompresseur à gaz d'échappement conforme à l'une des revendications 1 et 2,
**caractérisé en ce que**
la rainure (7) est obtenue sans enlèvement de copeaux ou avec enlèvement de copeaux.

4. Turbocompresseur à gaz d'échappement conforme à l'une des revendications 1 à 3,
**caractérisé en ce qu'**
il est constitué par un turbocompresseur à gaz d'échappement à une seule volute ou un turbocompresseur à gaz d'échappement à volute double.
